# FASCICULE DE BREVET EUROPEEN

(11) **EP 0 516 608 B1**
(45) Date de publication et mention de la délivrance du brevet: **09.08.1995**
(21) Numéro de dépôt: 92870082.2
(22) Date de dépôt: 27.05.1992
(51) Int. Cl.: B01D 45/14

(54) **Cylindre centrifugeur avec tambour pour épuration d'air ou filtrage**
Zentrifugierender Zylinder mit Trommel zum Reinigen oder Filtrieren von Luft
Centrifugal cylinder with drum for cleaning or filtering air

(30) Priorité: 30.05.1991 BE 9100527
(43) Date de publication de la demande: 02.12.1992
(73) Titulaire: Vandereviere, Laurent, B-1981 Zemst (BE)
(72) Inventeur: Vandereviere, Laurent, B-1981 Zemst (BE)
(74) Mandataire: de Kemmeter, François

(56) Documents cités:
- DE-C- 676 269
- DE-C- 923 523
- FR-A- 977 657
- FR-A- 1 205 723
- US-A- 2 560 874

## Description

L'invention concerne un dispositif d'épuration ou plus exactement de dépoussiérage d'air ou de gaz d'échappement sans l'aide de filtres déjà connus dans l'état de la technique.

On connaît par les documents FR-A-977.657 et DE-C-676 269 un dispositif d'épuration ou de dépoussiérage de gaz comprenant
· un tambour centrifugeur ou rotor monté en pouvant tourner à grande vitesse dans une enveloppe ;
· une admission de gaz au voisinage de l'axe du rotor ;
· le rotor soumettant le gaz à épurer à l'action de la force centrifuge ;
· une sortie étant prévue au voisinage de l'axe du rotor, du côté de celui-ci opposé à l'admission ;
· un moyen étant prévu pour assurer le transport du gaz de l'admission vers la sortie.

Ces dispositifs connus présentent toutefois l'inconvénient soit de rejeter les poussières ou autres impuretés à l'extérieur, soit de ne pas pas suffisemment retenir des particules de trés faibles dimensions présentes dans un gaz d'échappement.

La présente invention vise à remédier à ces inconvénients.

Cet objectif est atteint grâce aux mesures exposées dans la partie caractérisante de la revendication 1.

La figure 1 est une coupe du boîtier fixe et du tambour.

La figure 2 est une vue en perspective avec coupe partielle.

La figure 3 est une vue en coupe d'une application possible.

La construction se compose d'un axe portant un rotor ménageant dans une enveloppe ou boitier (4) dans lequel il tourne un espace périphérique (9), le rotor se compose de deux disques (2) qui sont perpendiculaires à l'axe et comportent au centre une ouverture servant d'entrée ou de sortie; entre ces deux disques, un disque (6) plus petit, sans ouverture, est monté perpendiculairement à l'axe et parallèlement aux deux disques plus grands.

L'axe est monté sur des roulements supportés par un boîtier fixe (4), qui s'ajuste contre les disques extérieurs pour fermer l'espace (5).

Entre les disques extérieurs sont montées symétriquement des cloisons (3) qui s'étendent en traversant transversalement le disque intérieur.

Sur les disques extérieurs, on peut prévoir des prolongements cylindriques (1) s'adaptant dans le boîtier fixe, avec des anneaux de fermeture (7) pour retenir la pression dirigée vers l'extérieur causée par les cloisons qui suivent le mouvement de rotation.

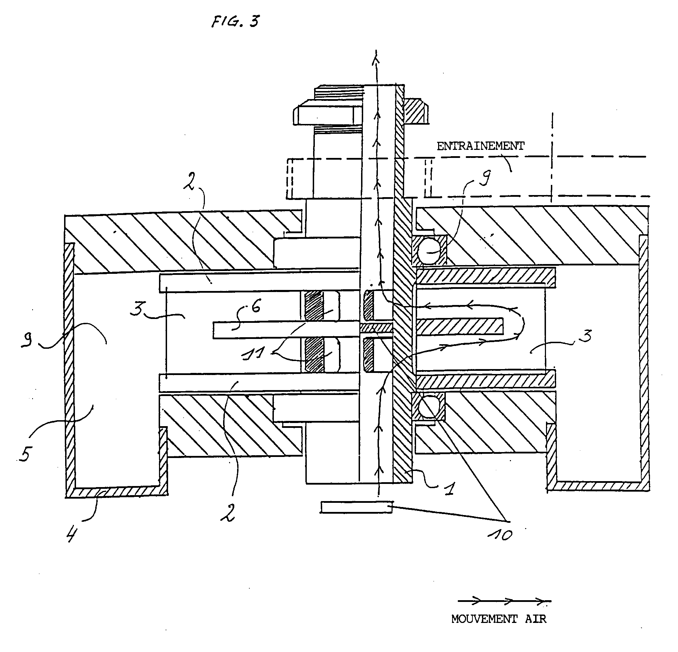

Pour une application illustrée à la fig. 3, on peut prendre un cylindre (1) dans son ensemble, monter les roulements (9) directement sur le cylindre, et placer une pastille de fermeture (10) à l'intérieur du cylindre, au niveau du disque central (6). Le passage de l'air ou des gaz est assuré par des ouvertures (11) ménagées dans la paroi du cylindre entre les disques extérieurs et intérieur.

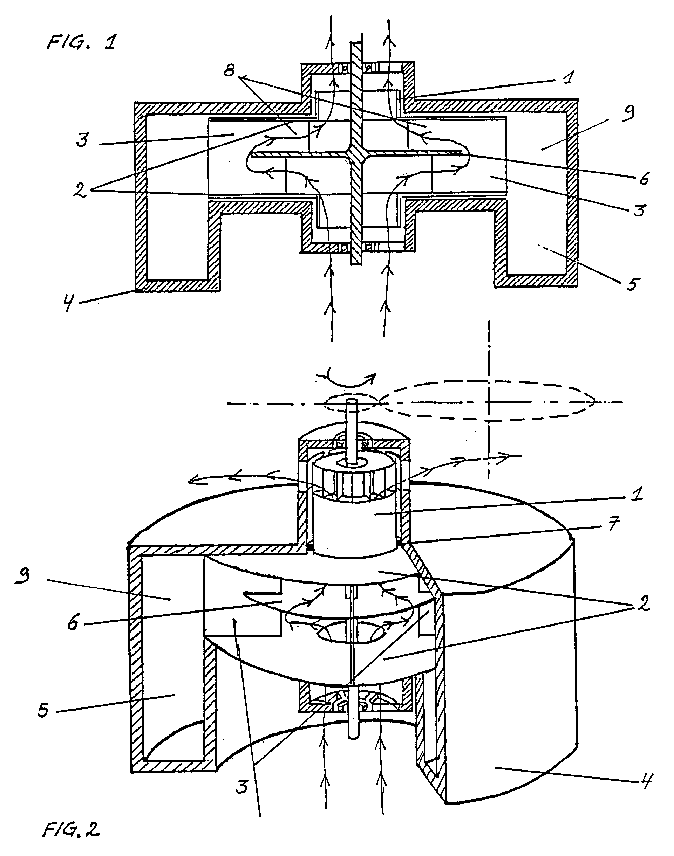

On peut assurer le transport des gaz souillés dans le cylindre à tambour en configurant les cloisons (3) du-dessus du disque central (6), côté sortie, plus longues que la partie située sous le disque central, côté entrée (voir fig. 1, repère (8)).

Le montage d'un ventilateur sur la sortie est également possible.

A un nombre de tours determiné, toutes les particules de poussières et pratiquement toutes les impuretés plus lourdes que l'air sont retenues dans le boitier fixe si bien que l'air ou les gaz d'échappement sortant seront débarassés des poussières.

## Revendications

1. Dispositif d'épuration ou de dépoussiérage de gaz comprenant :
· un tambour centrifugeur ou rotor (2,3,6) monté en pouvant tourner à grande vitesse autour d'un axe vertical dans une enveloppe ou boîtier (4), un espace périphérique (9) étant ménagé entre ledit rotor et l'enveloppe ;
· une admission de gaz au voisinage de l'axe du rotor ;
· le rotor soumettant le gaz à épurer à l'action de la force centrifuge ;
· une sortie étant prévue au voisinage de l'axe du rotor, du côté de celui-ci opposé à l'admission ;
· un moyen étant prévu pour assurer le transport du gaz de l'admission vers la sortie ;
caractérisé en ce que,
l'enveloppe ou boitier (4) comporte en-dessous de l'espace périphérique (9) un réceptacle annulaire (5) et en ce que,
en dehors des zones axiales d'admission et de sortie, l'enveloppe (4) est fermée de manière étanche à l'air vers l'extérieur si bien que les impuretés chassées par la force centrifuge vers le réceptacle annulaire (5) de l'enveloppe y restent à cause de la pression permanente créré par la rotation du rotor (2,3,6) tandis que le gaz débarrassé des impuretés sort par la sortie prévue au voisinage de l'axe du rotor.

2. Dispositif selon la revendication 1 caractérisé en ce que
le rotor est constitué d'un axe portant deux disques (2) montés perpendiculairement par rapport à cet axe et un troisième disque (6) plus petit monté entre les deux disques (2) mentionnés en premier lieu, parallèlement à ceux-ci et relié aux deux disques (2) plus grands par deux ou plusieurs cloisons (3) disposées symétriquement.

3. Dispositif suivant la revendication 2, caractérisé en ce que
l'enveloppe (4) est fermée de manière étanche à l'air extérieur au moyen d'une paroi continue et en ce que l'enveloppe (4) s'ajuste contre les disques extérieurs (2) du rotor.

4. Dispositif selon l'une des revendications précédentes, caractérisé en ce que
des prolongements cylindriques (1) s'adaptent dans le boîtier fixe ou enveloppe (4) avec au moins un anneau de fermeture (7) prévu à proximité de la sortie.

5. Dispositif selon l'une des revendications précédentes, caractérisé en ce que
au moins un anneau de fermeture (7) est disposé à proximité de l'ouverture d'admission.

6. Dispositif selon l'une des revendications 2 à 5, caractérisé en ce que la partie des cloisons (3) se trouvant au-dessus du disque central (6) (côté sortie désigné 8) est configurée plus longue que la partie située en dessous du disque central (6) (côté entrée), si bien que le rotor assure non seulement le dépoussiérage des gaz mais également leur transport.

7. Dispositif suivant l'une quelconque des revendications 1 à 5, caractérisé par
un ventilateur monté sur la sortie.

## Claims

1. Device for cleaning or removing dust from gases comprising:
· a centrifuging drum or rotor (2, 3, 6) mounted so that it can rotate at high speed about a vertical axis inside a casing or housing (4), a peripheral space (9) being formed between the said rotor and the casing;
· a gas intake close to the axis of the rotor;
· the rotor subjecting the gas to be cleaned to the action of centrifugal force;
· an outlet being provided close to the axis of the rotor, on the opposite side of the latter from the intake;
· a means being provided for transporting the gas from the intake to the outlet;
characterized in that the casing or housing (4) includes an annular receptacle (5) below the peripheral space (9) and in that outside of the axial intake and outlet zones, the casing (4) is airtight to the outside so that the dirt driven toward the annular receptacle (5) of the casing by centrifugal force remains there owing to the permanent pressure created by the rotation of the rotor (2, 3, 6) while the gas which has had its dirt removed leaves via the outlet provided close to the axis of the rotor.

2. Device according to Claim 1, characterized in that the rotor consists of a shaft bearing two discs (2) mounted perpendicularly relative to this axis and a smaller third disc (6) mounted between the two discs (2) mentioned firstly, parallel to these and connected to the two larger discs (2) by two or more partitions (3) arranged symmetrically.

3. Device according to Claim 2, characterized in that the casing (4) is sealed to the outside air by means of a continuous wall and in that the casing (4) sits against the outer discs (2) of the rotor.

4. Device according to one of the preceding claims, characterized in that cylindrical extensions (1) fit into the fixed housing or casing (4) with at least one closure ring (7) provided close to the outlet.

5. Device according to one of the preceding claims, characterized in that at least one closure ring (7) is located close to the intake opening.

6. Device according to one of Claims 2 to 5, characterized in that the part of the partitions (3) situated above the central disc (6) (on the outlet side denoted 8) is configured to be longer than the part situated below the central disc (6) (inlet side), so that the rotor not only removes the dust from the gases but also transports them.

7. Device according to any one of Claims 1 to 5, characterized by a blower mounted on the outlet.

## Patentansprüche

1. Vorrichtung zur Reinigung oder zur Entstaubung von Gas mit:
- einer Zentrifugiertrommel oder einem Rotor (2, 3, 6), der in einer Umkleidung oder einem Gehäuse (4) um eine vertikale Achse mit großer Geschwindigkeit drehbar gelagert ist, wobei zwischen dem Rotor und der Umkleidung ein Ringraum (9) angeordnet ist;
- einem Einlaß für das Gas in der Nähe der Achse des Rotors;
- wobei der Rotor das Gas durch Einwirkung der Zentrifugalkraft einer Reinigung unterwirft;
- einem Auslaß, der in der Nähe der Achse des Rotors auf dessen dem Einlaß gegenüberliegenden Seite vorgesehen ist; und
- einem Mittel, das zum Sicherstellen des Transports des Gases von dem Einlaß zu dem Auslaß vorgesehen ist;
**dadurch gekennzeichnet**,
daß die Umkleidung bzw. das Gehäuse (4) unterhalb des Ringraums (9) einen ringförmigen Behälter (5) umschliesst und daß die Umkleidung (4) außerhalb der axialen Bereiche des Einlasses und des Auslasses auf luftdichte Art nach außen abgeschlossen ist, so daß die Verunreinigungen, die durch die Zentrifugalkraft in Richtung auf den ringförmigen Behälter (5) der Umkleidung getrieben werden, dort aufgrund eines durch die Rotation des Rotors (2, 3, 5) hervorgerufenen dauerhaften Drucks verbleiben, während das von den Verunreinigungen befreite Gas durch den in der Nähe der Achse des Rotors vorgesehenen Auslaß ausströmt.

2. Vorrichtung nach Anspruch 1, **dadurch gekennzeichnet**,
daß der Rotor durch eine Achse gebildet wird, die zwei bezüglich dieser Achse rechtwinklig angeordnete Scheiben (2) und eine kleinere, zwischen den zwei zuerst genannten zwei Scheiben sowie parallel zu diesen angeordnete und mit den zwei grösseren Scheiben (2) über zwei oder mehr symmetrisch verteilte Zwischenwände (3) verbundene dritte Scheibe (6) trägt.

3. Vorrichtung nach Anspruch 2, **dadurch gekennzeichnet**,
daß die Umkleidung (4) mittels einer umlaufenden Wandung auf luftdichte Art nach außen abgeschlossen ist und daß die Umkleidung (4) auf die äußeren Scheiben (2) des Rotors abgestimmt ist.

4. Vorrichtung nach einem der voranstehenden Ansprüche, **dadurch gekennzeichnet**,
daß zylinderförmige Verlängerungen (1) über mindestens einen nahe dem Auslaß vorgesehenen Dichtring (7) in das feste Gehäuses bzw. die Umkleidung (4) eingepaßt sind.

5. Vorrichtung nach einem der voranstehenden Ansprüche, **dadurch gekennzeichnet**,
daß mindestens ein Dichtring (7) nahe der Öffnung des Einlasses angeordnet ist.

6. Vorrichtung nach einem der Ansprüche 2 bis 5, **dadurch gekennzeichnet**,
daß der Teil der Zwischenwände (3), der sich oberhalb der mittleren Scheibe (6) befindet (als Auslaßseite 8 bezeichnet), länger ausgebildet ist als der unterhalb der mittleren Scheibe angeordnete Teil (Einlaßseite), so daß der Rotor nicht nur die Entstaubung des Gases sondern auch seinen Transport sicherstellt.

7. Vorrichtung nach einem der Ansprüche 1 bis 5, **dadurch gekennzeichnet**,
daß am Auslaß ein Ventilator angeordnet ist.
